# EUROPEAN PATENT APPLICATION

(11) **EP 1 082 902 A1**
(43) Date of publication of application: **14.03.2001**
(21) Application number: 00307706.2
(22) Date of filing: 07.09.2000
(51) Int. Cl.: A01N 43/90

(54) **Plant-root growth promoting agent**

(30) Priority: 07.09.1999 JP 25266499
(71) Applicant: Ajinomoto Co., Inc., Tokyo (JP)
(72) Inventor: Murayama, Akira, Ajinomoto Co., Inc., Tokyo 104-8315 (JP)
(74) Representative: Nicholls, Kathryn Margaret

(57) **Abstract**

Herein are disclosed improvements in the preparation form of a plant growth promoting agent containing inosine as the effective ingredient, which relate to a plant growth promoting agent comprising a solid inosine content (e.g., free inosine and/or inosine calcium salt) as an effective ingredient, and also to a plant growth promoting agent consisting essentially of a mixture of inosine calcium salt and/or free inosine and a cultivating soil.

## Description

### [Technical Field to which the Invention Belongs]

The present invention relates to a plant growth promoting agent which comprises an inosine material, for example, inosine calcium salt, free inosine, or the like, as an effective ingredient. Such a plant growth promoting agent includes, for example, a mixture of inosine calcium salt and/or free inosine and a cultivating soil, which term is used to encompass any solid plant growth medium.

Heretofore, several examples in which a nucleic acid-related substance is applied to plants have been known. The examples include (a) Japanese Patent Publication (Koukoku) No. 22919/1964, (b) Japanese Patent Publication (Koukoku) No. 16310/1974, (c) Japanese Patent Publication (Koukoku) No. 17670/1979, (d) Japanese Patent Application Laid-Open (Koukai) No. 56759/1973, (e) Japanese Patent Application Laid-Open (Koukai) No. 68848/1975, etc. As might be seen from these patent documents, indeed, it is heretofore known that nucleic-acid related substances are applied to plants, but in some cases, the combined use of such substance(s) with other substance(s) is considered as an essential requirement. Even if various nucleic acid-related substances are used singly, they are regarded as substances having the same effects (equivalents) without being distinguished from each other. In addition, the way how the effective ingredient is applied is quite different from that according to the present invention.

The growth of their roots is an important basis for plants to grow further. Based on the sound growth of its roots, a plant extends its leaves, puts forth its floral buds to be pollinated, bears its fruits, and enlarges the fruits.

From such a viewpoint, there had been a demand for the development of a novel substance (composition), or a novel method capable of promoting the growth of plant roots. Against such prior art background, the present inventor previously provided a novel plant-root growth promoter (i.e., a novel plant-root growth promoting agent) and a novel method of promoting the growth of plant roots, i.e., a plant-root growth promoter comprising inosine as an effective ingredient and a method for promoting plant-root growth comprising applying such plant-root growth promoter to the soil or, in the case of hydroponics, to the hydroponic water (Japanese Patent No. 2927269 and EP-A-0 841 007).

In the specification of the above Japanese patent, the above plant-root growth promoter is described as follows: "the plant-root growth promoter containing inosine as an effective ingredient can be formed into a liquid preparation in which the promoter has been dissolved or dispersed appropriately in a suitable solvent such as water so that its application through soil or hydroponic water can be carried out conveniently, or can be formed into a powder or granular preparation by using an appropriate filler, binder or the like. Especially from the viewpoint of preventing putrefaction or increasing solubility, it is preferred to prepare an alkaline aqueous solution of inosine by using an inorganic alkali such as alkali metal hydroxide, e.g., NaOH or KOH, alkaline earth metal hydroxide, e.g., Mg(OH)₂, or a basic amino acid such as lysine or arginine." (paragraph 0021 of the specification). Actually, in view of labor necessary for spraying, solid preparations are, in many cases, not preferred in general agriculture. Particularly in facilitated horticulture, it is very easy to spray an aqueous solution in a certain amount to plant roots since tubes for irrigating water are equipped. It is necessary for many crops to feed water, and there is a custom of supplying liquid fertilizer at the same time, so that the liquid form is preferred.

Specifically, both purposes of increasing the solubility and preventing the putrefaction/decomposition were effected, for example, by increasing the pH to about 11.3 with KOH. Also, in this preparation form, mere calling of farmers' attention can avoid accidents resulting in injury or death. On the contrary, for domestic uses on a small scale such as uses for a kitchen garden, a potted plant, gardening, and the like, it is preferable that plant-root growth promoters are in the preparation form having a concentration at which it can be used without further dilution, since the supply at a high concentration requires a troublesome dilution and is accompanied by a risk of making a mistake in adjusting concentrations. Moreover, it is strongly desired to prevent such risk that children may put the preparation into their eyes and such trouble that children may drink it in error.

Therefore, an object of the present invention is to develop and provide a product (a plant growth promoting agent) which is in the preparation form capable of avoiding these risk factors and exhibiting the same effect in the performance at that.

As a result of his extensive studies with a view to attaining the above object, the present inventor has found that the object can be easily attained by changing, in preparation form, the above plant-root growth promoter comprising inosine as an effective ingredient to a form comprising a solid inosine content as an effective ingredient. Based on such findings, the invention has been completed.

Namely, the present invention relates to a plant growth promoting agent which comprises a solid inosine content as an effective ingredient, and a plant growth promoting agent which consists essentially of a mixture of inosine calcium salt and/or free inosine and a cultivating soil, which is included in the former plant growth promoting agent.

### BRIEF DESCRIPTION OF THE DRAWINGS

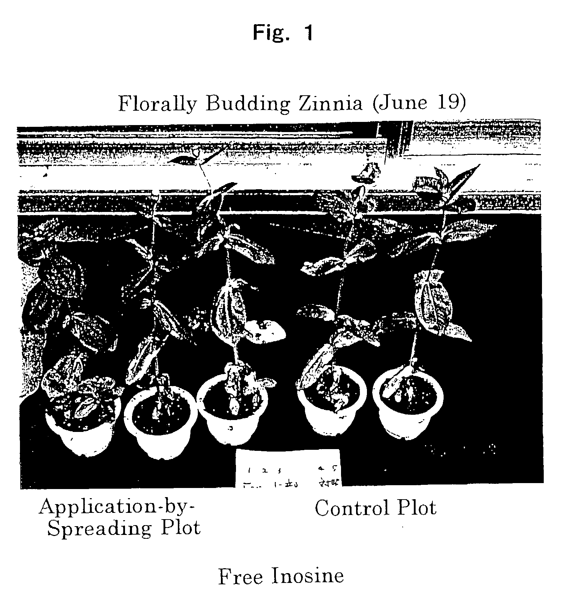

Fig. 1 is to show the effects of the plant growth promoting agent (free inosine) of the present invention (Test Example 1).

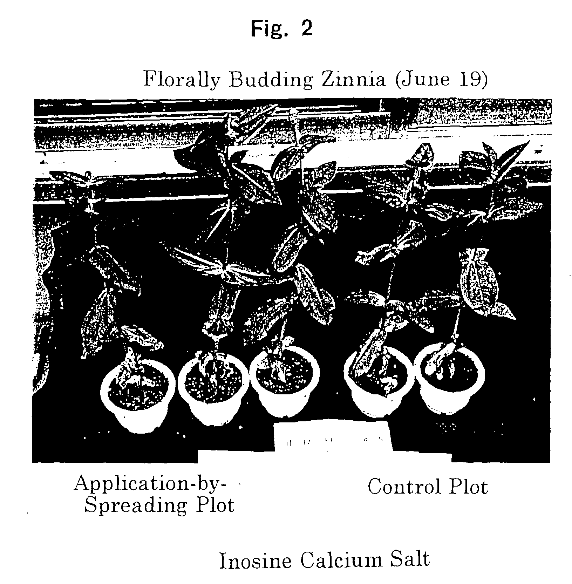

Fig. 2 is to show the effects of the plant growth promoting agent (inosine calcium salt) of the present invention (Test Example 1).

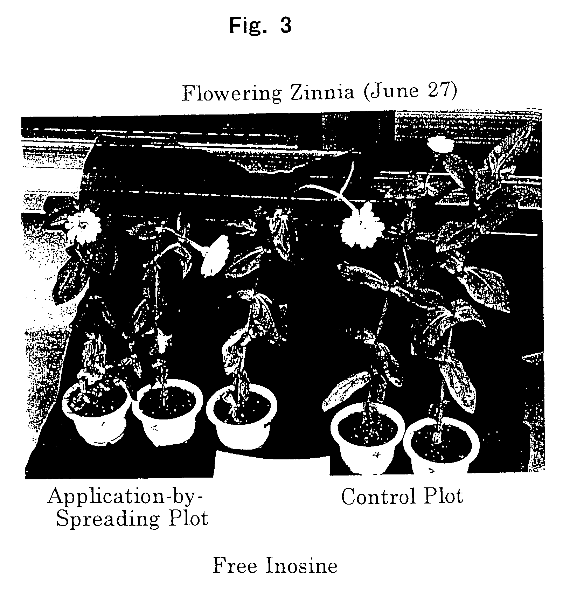

Fig. 3 is to show the effects of the plant growth promoting agent (free inosine) of the present invention (Test Example 1).

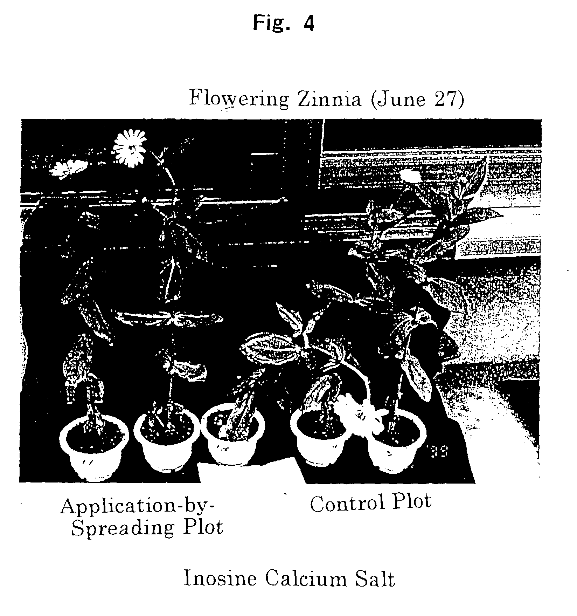

Fig. 4 is to show the effects of the plant growth promoting agent (inosine calcium salt) of the present invention (Test Example 1).

### DETAILED DESCRIPTION OF THE INVENTION

The present invention will be described in detail below.

Plants to which the plant growth promoting agent of the present invention is to be applied can be exemplified widely by leaf vegetables, fruit vegetables, root vegetables, flowers, fruit trees, grains, and so on.

The "solid inosine content" means salts of inosine and/or free inosine (inosine in the free state being referred to herein as "free inosine" for stressing the state in contrast with the salt state). The salts of inosine and free inosine are usually solid. Regarding the present invention, however, in order to stress the contrast with the form of the above prior-art liquid preparation, the words "inosine content" are preceded with the word "solid". The preparation form of the plant growth promoting agent of the present invention is also solid (in contrast to liquid and gas).

As examples of the salts of inosine, there may be mentioned the alkaline earth metal salts such as calcium salt, magnesium salt and the like, and the alkali metal salts such as sodium salt and the like. Among them, the calcium salt is preferred, from the viewpoints of production cost, crystal size, low solubility, high recovery, and so on. As inosine calcium salt (hereinafter referred to as 'inosine Ca salt" sometimes), its anhydride, its dihydrate, and so on are known. Inosine Ca salt to be mixed into the plant growth promoting agent of the present invention is preferably the dihydrate ((HXR)₂Ca·2H₂O) in view of the operating temperature for preparing the salt, but is not limited to it. By the way, as an example of the method of producing the dihydrate of inosine Ca salt, there may be mentioned a method of preparing the salt from inosine and calcium hydroxide (slaked lime) at a temperature of 20 to 40°C.

In addition, as is well known, inosine (free inosine) is the condensation product of hypoxanthine with D-ribose, and is a white crystalline powder. Its anhydride has a melting point of 218°C (decomposition) and its dihydrate has a melting point of 90°C. It is slightly soluble in water, and is hardly soluble in ethanol and chloroform. The hydrate easily changes into the anhydride during the drying process. Free inosine products to be mixed into the plant growth promoting agent of the present invention are preferably those having a high purity for reasons of exhibiting physiological effects.

The inosine salts and free inosine (i.e., the inosine content) may be mixed singly or in combination of two or more of them at the same time, into the plant growth promoting agent of the present invention. Among inosine Ca salt and free inosine, inosine Ca salt has a lower solubility (one fifth of that of free inosine anhydride), and is less hygroscopic, so that it is superior from these points of view. However, free inosine is superior in view of the production cost and the rapid appearance of the effects (refer to the examples shown later).

The "cultivating soil" means, in general, bed soil for cultivating seedlings or support soil of roots for the use of highly equipped cultivation of, e.g., strawberry. In preparing the plant growth promoting agent of the present invention, such cultivating soil may be optionally used in combination with the solid inosine content, without harming plants, and as a diluent of the effective ingredient, whereby the plant growth promoting agent can become easier to use or apply. In this case, the preferable requirements of the cultivating soil include the following: (1) The soil particles should be as uniform as possible in particle size, and also, since the inosine content present in a very small amount may possibly be unevenly distributed when the difference in particle size among the soil particles is large, the maximum particle size should be 5 mm or less, and preferably 3 mm or less in diameter; (2) The cultivating soil should be a material as less hygroscopic as possible; (3) It should not be contaminated with microorganisms as far as possible; (4) In order to avoid the deterioration by microorganisms (i.e., microbial degradation) of the inosine content when present in the plant growth promoting agent of the present invention, the cultivating soil should be sufficiently dry at the time of mixing with the inosine content, and, for example, its water content should be 25% or less, and preferably 10% or less. From these viewpoints, specifically preferred are synthetic cultivating soils such as vermiculite, palm shell, charcoal, bora soil, and the like, and natural soils such as Japanese Kanuma tsuchi soil and the like. All these materials increase the air phase.

The following Table 1 shows a constitutional example of the cultivating soil using these cultivating soils in combination.

**Table 1:**

| Composition of Cultivating Soil | |
|---|---|
| Cultivating soil | Ratio (wt%) |
| Vermiculite | 20 |
| Palm shell | 40 |
| Charcoal | 25 |
| Bora soil | 15 |
| Total | 100 |

The method of preparing the plant growth promoting agent of the present invention consisting essentially of a mixture of an inosine content and a cultivating soil, is not particularly limited. For example, the promoting agent can be prepared by merely stirring/mixing homogeneously one of inosine Ca salt and free inosine or both of them with a cultivating soil by means of, for example, a rotary mixer.

In the preparation of a plant growth promoting agent of the present invention, the mixing ratio (blending ratio) of the inosine Ca salt and/or free inosine to the cultivating soil is determined so that the applying amount shall be essentially the same in terms of free inosine as that described in the specification of the afore-mentioned Japanese Patent No. 2927269. Namely, "Proper application amounts vary with the time of application, the kind or cultivation density of the plant, the growth stage, or the like. Anyway, it is to be noted in this connection that the plant growth promoting agent of the present invention shall be applied in an amount which permits the growth of a plant as a whole (the growth herein meaning not only the root growth but also a lot of flowering or larger flowers as shown in the examples given later) superior to the growth of a plant cultivated under the same conditions except that the plant growth promoting agent of the present invention has not been applied. This amount can be determined by some preliminary comparative tests which can be easily carried out by those skilled in the art. In the case of soil before sowing, for example, the concentration of inosine can be as low as 5 to 50 g per 100 tons of soil (0.05 to 0.5 ppm). That is, the plant growth promoting agent of the present invention exhibits its plant growth promoting action or effects at such low concentrations." (see paragraph 0023 of the above patent specification).

Specifically, in consideration of the convenience referred to previously of using the plant growth promoting agent of the present invention, the following will show one example. Namely, inosine Ca salt dihydrate and/or free inosine is blended in an amount of 0.01 to 0.2% (as an additional amount) in terms of free inosine, for example, relative to, or based on, the synthetic cultivating soil. Since the amount is in terms of, or a calculated value as, free inosine, in the case of using free inosine, the weight of the free inosine blended is per se the amount in terms of free inosine, while, in the case of using inosine Ca salt dihydrate, 87.6% of the weight of the inosine Ca salt dihydrate blended is the amount in terms of free inosine, in consideration of the above molecular formula. The plant growth promoting agent having such a composition can be applied to a farm at a ratio of 10 g per 500 g of the farm soil (in the case of 0.1% relative to cultivating soil, 20 ppm in terms of free inosine to farm soil).

Incidentally, the following can be pointed out as the characteristics of such plant growth promoting agent: (1) Since it is neutral, it can be applied without anxiety to plants sensitive to alkali. (2) When packed in a container together with a desiccant, it can be kept stable and has no possibility of deterioration for a long period of time. (3) There is no risk in case of putting it into mouth in error (inosines being extremely easy to purify to a purity degree suitable for a food additive). (4) Since the solubility of inosines, even inosine Ca salt, is low, the action of increasing pH of its solution is negligible. (5) The amount (absolute amount) of inosine Ca salt and/or free inosine blended is small and therefore, especially in the case of using charcoal (cultivating soil), odor from putrefaction is not emitted. And, (6) Applying method is convenient, since the operation of dilution is not necessary. In addition, with regard to the concurrent use with other fertilizer and the like, (7) there is no possibility of deterioration of the free inosine by the concurrent use of such other fertilizer and the like in combination. Furthermore, (8) since it is neutral, ammonia gas is not emitted even when it is mixed with a fertilizer containing ammoniacal nitrogen.

The applying method of the inventive plant growth promoting agent is also similar to the method of the above Japanese Patent No. 2927269, and the examples thereof include a method of applying the promoting agent to the soil in advance, followed by sowing it with plant seeds. In addition, other examples of the applying method include, for the purpose of preventing the fruit-bearing exhaustion of a fruit vegetable such as strawberry or melon, a method of applying the promoting agent at a proper time during cultivation, for example, by adding to the soil at the roots of the fruit vegetable when the symptoms of fruit-bearing exhaustion are observed or in advance when fruit-bearing exhaustion is expected even if there are no actual symptoms thereof observed (paragraph 0022 of the patent specification).

Specifically, the plant growth promoting agent of the present invention can be applied (used) as follows: (1) In the case of using it for household pots, it is spread in an amount of about 5 to 10 g, though it depends on the size of the pot, to the surface of the pot soil and then a sufficient amount of water is fed thereto. At that time, the inosine dissolved in water should be brought into contact with the roots. (2) In the case of mixing it with other synthetic cultivating soil or fresh soil, like upon transplantation or the like, the promoting agent is mixed with the soil in an amount of one tenth of the whole bed soil, followed by transplanting and feeding with a sufficient amount of water. (3) In the presumed case of the use by a floral seedling-producing farmer, the roots are generally harmed through a long term storage of the seedlings by the farmer. In that case, however, by using the material (the plant growth promoting agent of the present invention) through mixing with the bed soil, i.e., mixing it with the bed soil, the problem can be solved. Particularly, in case of inosine Ca salt, it is not dissolved all at once, and therefore the effect is sustainable during several times of sprinkling water. And, (4) In the presumed case of the use by a seedling seller, the loss of the unsold seedlings is costly for the seller. Application of the material to the pots, as a measure for preventing their deterioration, can solve the problem.

Now, it is additionally noted how to store the plant growth promoting agent of the present invention. For the reason of preventing putrefaction of the nucleic acid substance as the effective ingredient, dryness is the most important for a long-term storage. Therefore, it is preferable to keep the inside of a container for the plant growth promoting agent of the present invention at a low humidity by making the container out of a moisture-impermeable material, or by enclosing, for example, a solid desiccant in the container. Also, it should be avoided that rainwater or the like is allowed to enter into the container from the outside, whereby the content gets moist. On the other hand, the plant growth promoting agent of the present invention does not need storing in a cool dark place, and there is no possibility that mouse or the like eats the container to open a hole, owing to the properties of the plant growth promoting agent of the present invention.

### EXAMPLES

The following test examples will explain the present invention more precisely.

### Test example 1 (Effects on zinnia (as a floral seedling))

Zinnia was selected as a floral seedling, and the effects on this of the plant growth promoting agent of the present invention were examined by the confirmation test carried out according to the design for confirmation test shown in the following Table 2.

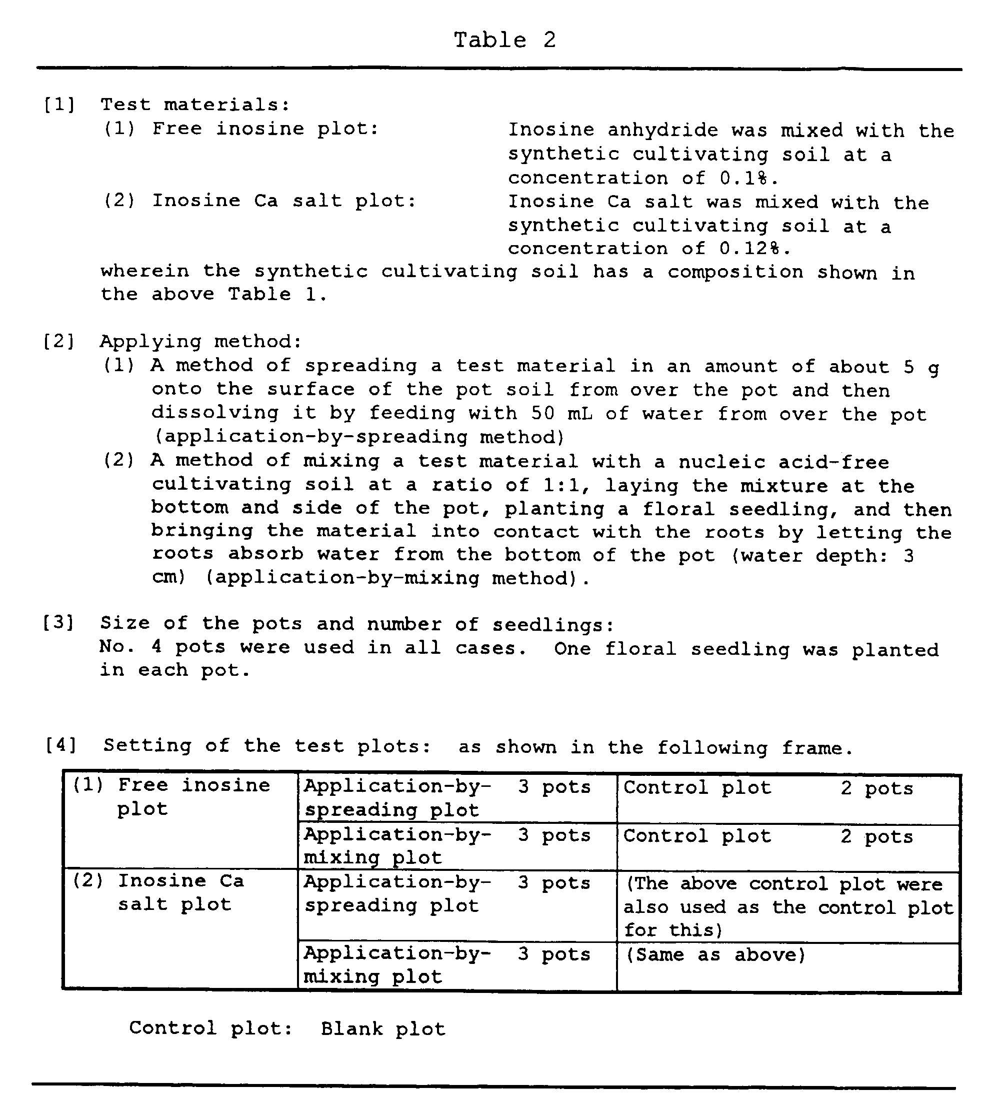

Progress of the test was shown in the following Table 3.

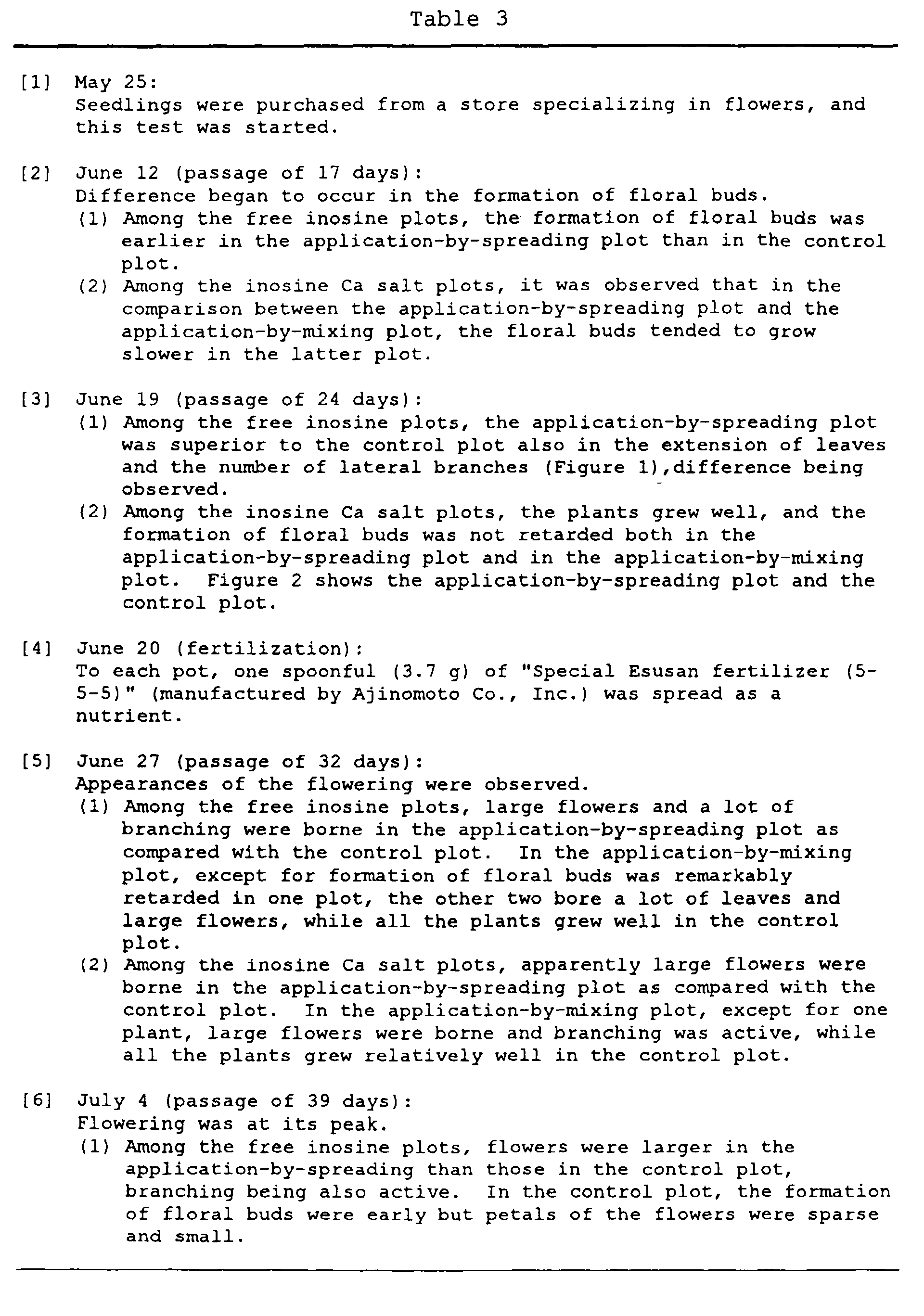

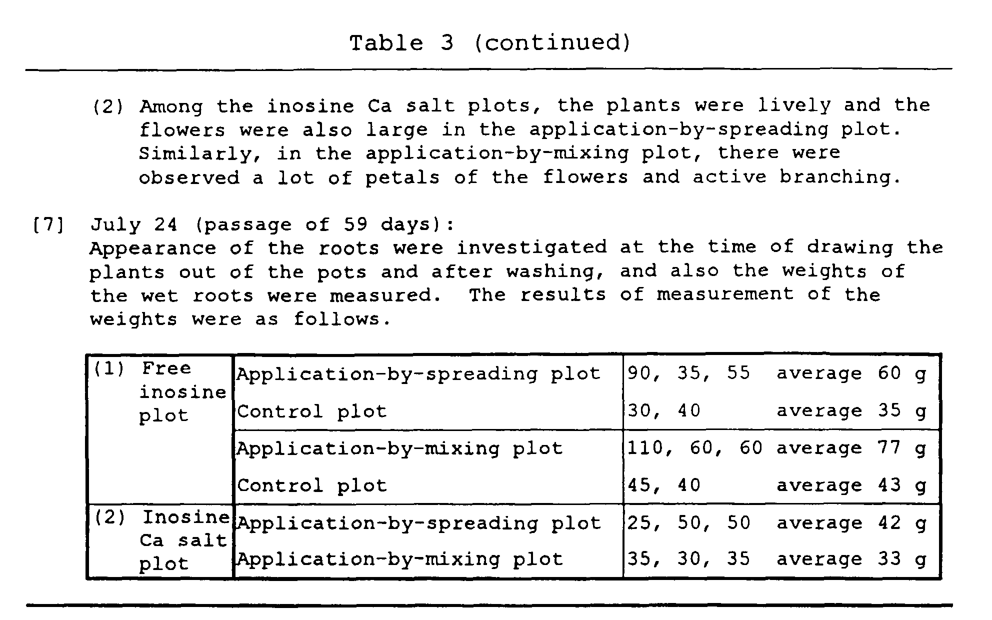

From the weights of the roots shown under [7] of Table 3, the following can be noted. That is, (1) the difference between free inosine and inosine Ca salt indicates that free inosine contributes to the growth more strongly. It is surmised that this is due to the higher solubility of free inosine. (2) The weight of the roots is deeply related to the growth of the part of a plant on or over the ground. No. 1 (90 g) of the application-by-spreading plot of free inosine, and No. 1 (110 g) of the application-by-mixing plot of free inosine were lively both in size of the flowers and branching.

The present Test example and the results thereof are summarized as follows: (1) Two kinds of the plant growth promoting agent of the present invention were prepared by way of trial, and comparison with the cases where the plant growth promoting agent was not used (control plots) was carried out by using a method of applying a test material onto the upper part (surface) of the pot soil from over the pot, followed by sprinkling water (application-by-spreading method) and, on the assumption of transplantation, a method of laying it at the bottom and side of a pot, and allowing the roots absorb water from the bottom of the pot (application-by-mixing method). (2) Zinnia was selected as a test flower. Test was carried out using 16 pots in total (one seedling per each pot). (3) Among the two kinds of the plant growth promoing agent, the promoting agent containing free inosine as the effective ingredient tended to show the effects faster than the promoting agent containing inosine Ca salt. In addition, there was observed a tendency that, in the plots where the plant growth promoting agent of the present invention (free inosine or inosine Ca salt) was applied, stages until flowering were hastened and the flowers were generally large. And, (4) finally, weights of the roots were measured to observe that the roots were particularly extended in two pots (the application-by-spreading plot of free inosine, and the application-by-mixing plot of free inosine).

### Test example 2 (Effects on pimiento (as a vegetable seedling))

Pimiento was selected as a vegetable seedling, and the effects on this of the plant growth promoting agent of the present invention were examined by confirmation test carried out according to the same design for confirmation test as in Test example 1.

Progress of the test was shown in the following Table 4.

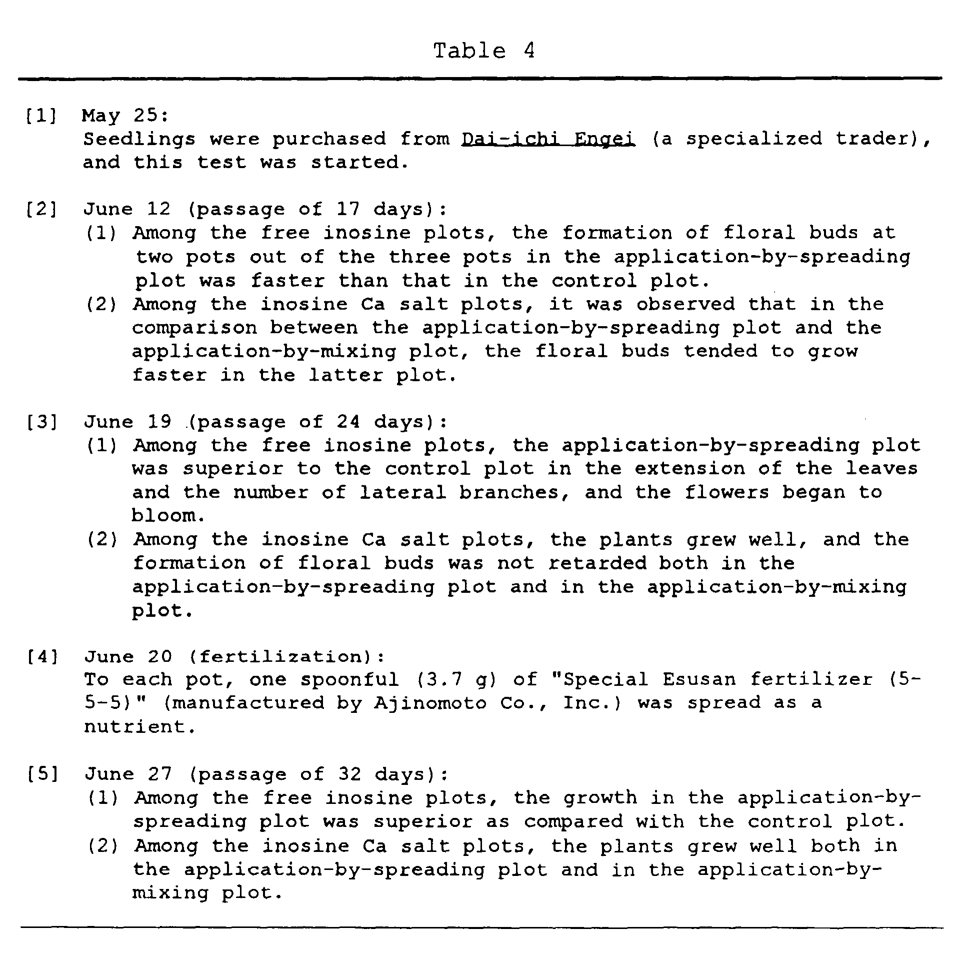

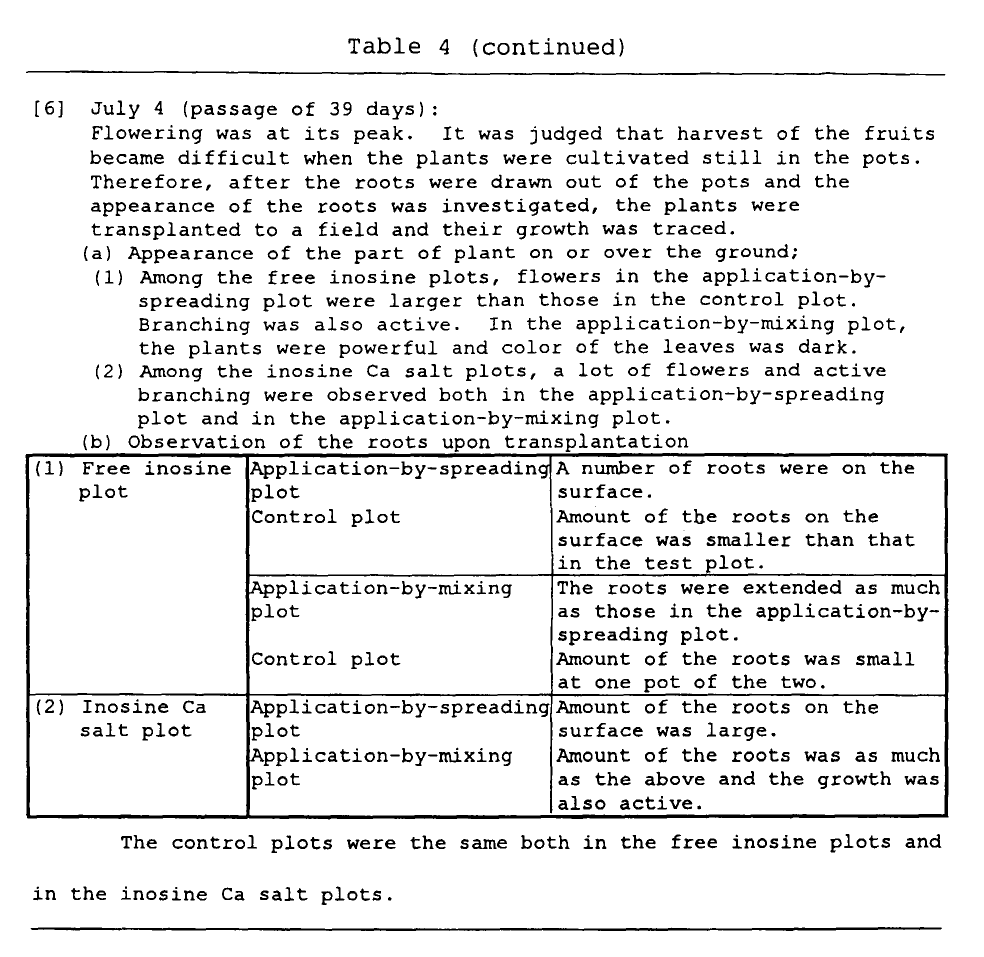

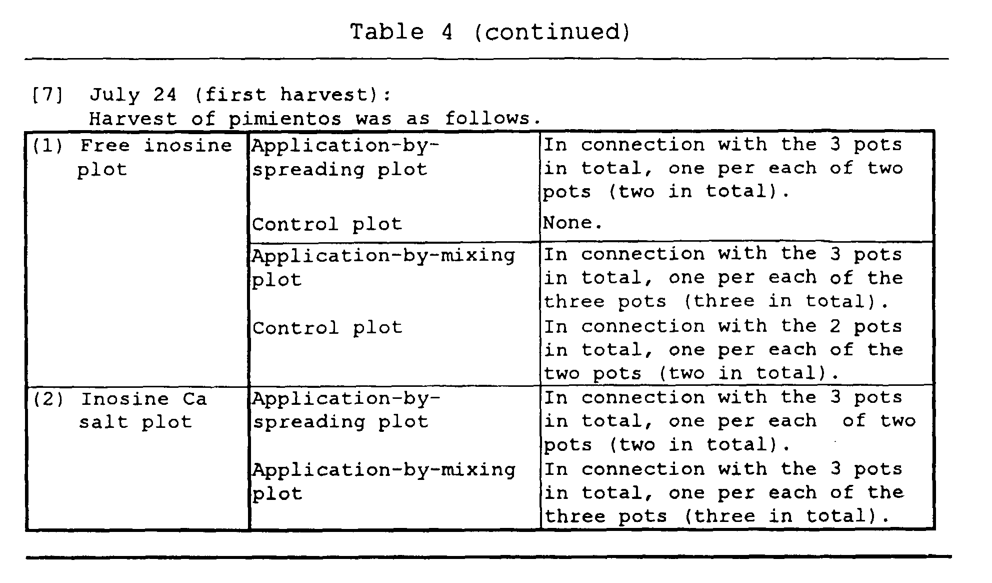

The present Test example and the results thereof are summarized as follows: (1) As in Test example 1, two kinds of the plant growth promoting agent of the present invention were prepared by way of trial, and comparison with the cases where the plant growth promoting agent was not used (control plots) was carried out by using a method of applying a test material onto the upper part (surface) of the pot soil from over the pot, followed by sprinkling water (application-by-spreading method) and, on the assumption of transplantation, a method of laying it at the bottom and side of a pot, and allowing the roots absorb water from the bottom of the pot (application-by-mixing method). (2) Pimiento was selected as a test vegetable. Test was carried out using 16 pots in total (one seedling per each pot). (3) Among the two kinds of the plant growth promoting agent, the promoting agent containing free inosine as the effective ingredient tended to show the effects faster than the promoting agent containing inosine Ca salt. In addition, there was observed a tendency that, in the plots where the plant growth promoting agent of the present invention (free inosine or inosine Ca salt) was applied, stages until flowering were hastened and the flowers were generally large. These effects are the same as in Test example 1. (4) The growth until the harvest of the fruits in the test plots was apparently different from that in the control plots, and extension of the roots was also superior. And, (5) after the transplantation onto the field, growth of the fruits was also well as compared with that in the control plots.

### Test example 3 (Effects on blue salvia (as a floral seedling))

Blue salvia was selected as another floral seedling, and the effects on this of the plant growth promoting agent of the present invention were examined by the confirmation test carried out according to the design for confirmation test shown in the following Table 5.

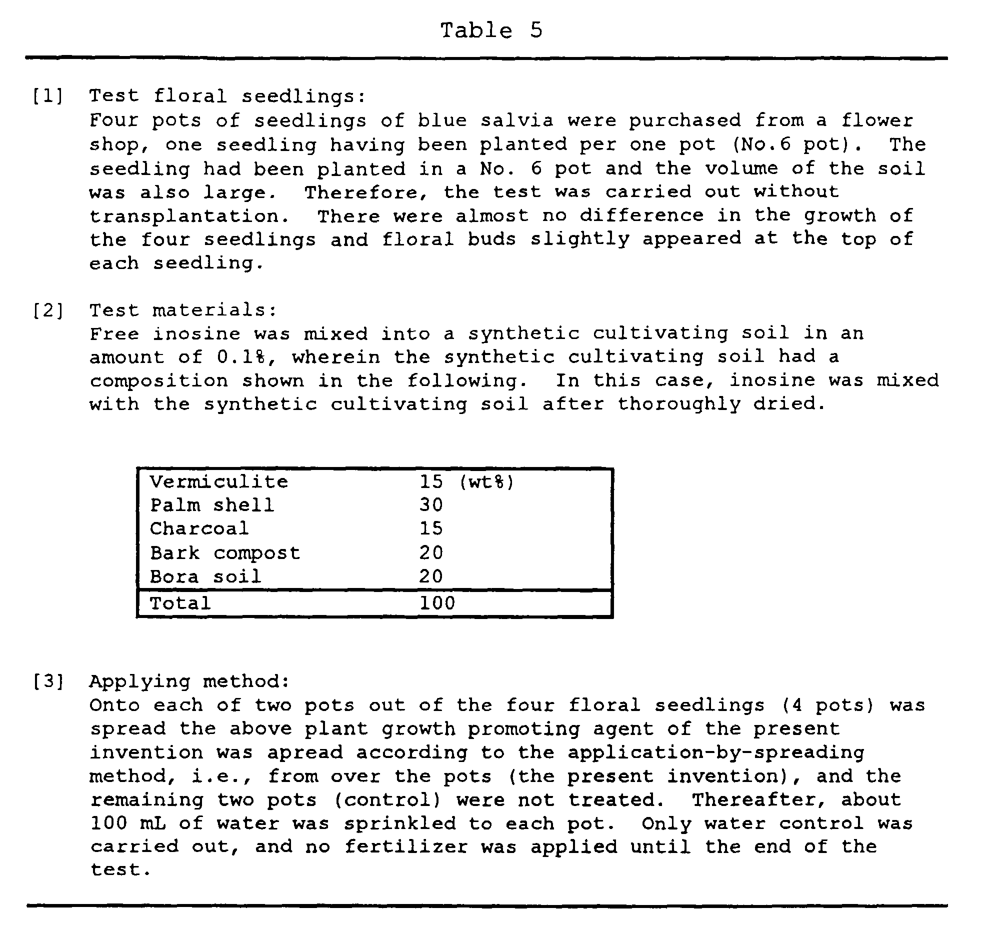

Progress of the test was shown in the following Table 6.

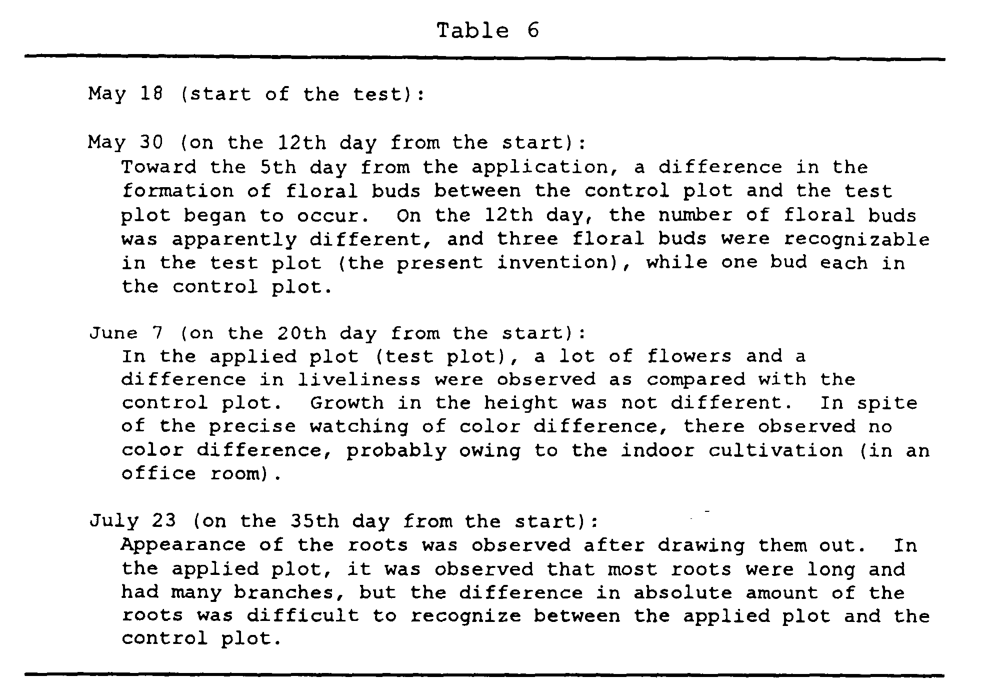

The present Test example and the results thereof are summarized as follows: (1) It has been confirmed that even a floral seedling in a pot placed in a room could bear a lot of flowers safely and conveniently without any risk by using the plant growth promoting agent of the present invention. (2) It has been found that an ordinary flower could maintain the liveliness until the end by applying the plant growth promoting agent of the present invention only once. There observed an excellent branching of as much as about three times. As a result, a lot of floral buds became one characteristic. (3) No odor occurred even when only water control was carried out during the cultivation. In addition, there is little risk of occurrence of odor from the components of the cultivating soil.

The present invention can easily provide a plant growth promoting agent which enables easy promotion of growth of plant roots, and as the results thereof, growth and enlargement of leaves, floral buds, fruition, fruits and the like can be easily realized. Namely, there is conveniently provided a plant growth promoting agent capable of easily promoting the growth of plants and having a preparation form preferable for the use of a small amount.

## Claims

1. A plant growth promoting agent which comprises a solid inosine content as an effective ingredient.

2. The plant growth promoting agent as set forth in claim 1, wherein said solid inosine content is inosine calcium salt and/or free inosine.

3. A plant growth promoting agent which consists essentially of a mixture of inosine calcium salt and/or free inosine and a cultivating soil.

4. The plant growth promoting agent as set forth in claim 3, wherein the total content of said inosine calcium salt and/or free inosine is from 0.01 to 0.2 wt% in terms of free inosine.

5. A method of preparing an agent according to any preceding claim comprising dry-mixing a solid plant growth medium with a solid inosine material which is one or more of inosine and inosine salts.

6. A method according to claim 5 wherein the solid inosine material is crystalline.

7. A method according to claim 5 or claim 6 wherein the inosine and/or the or each salt constituting the solid inosine material is substantially pure.

8. A method according to claim 5 or claim 6 wherein the inosine and/or the or each salt constituting the solid inosine material is at least 95% pure, preferably at least 98% pure, by weight.

9. A method according to any of claims 5 - 8 wherein the plant growth medium has a moisture content of 25% or less, preferably 10% or less.

10. A method according to any of claims 5 - 9 wherein the plant growth medium has a maximum particle size of 5mm diameter, preferably 3mm.
